# EUROPÄISCHE PATENTANMELDUNG

(11) **EP 3 503 493 A1**
(43) Veröffentlichungstag der Anmeldung: **26.06.2019**
(21) Anmeldenummer: 17210253.5
(22) Anmeldetag: 22.12.2017
(51) Int. Cl.: H04L 29/06

(54) **KOMMUNIKATIONSVORRICHTUNG UND VERFAHREN ZUM VERARBEITEN EINES NETZWERKPAKETS**

(71) Anmelder: Siemens Aktiengesellschaft, 80333 München (DE)
(72) Erfinder: Belhachemi, Omar, 80639 München (DE); Falk, Rainer, 85586 Poing (DE); Feist, Christian Peter, 80689 München (DE); Fischer, Kai, 85598 Baldham (DE); Friedrich, Daniela, 81541 München (DE); Fries, Steffen, 85598 Baldham (DE); Heintel, Markus, 81377 München (DE)

(57) **Zusammenfassung**

Kommunikationsvorrichtung (102) für eine erste Einrichtung (100), wobei die Kommunikationsvorrichtung (102) geeignet ist, ein eingehendes Netzwerkpaket von einer zweiten Einrichtung zu empfangen, umfassend:
eine Netzwerkschnittstelle (4) zum Empfangen des eingehenden Netzwerkpakets;
eine Speicher-Einheit (23) zum Speichern von Zugriffskontrolldaten (6) zur Angabe von N Sicherheitslabels, die für M vorbestimmte Anwendungen (14-14d) zulässig sind, mit N≥1 und M≥1;
eine Labelling-Einheit (22) zum Zuweisen eines aktuellen Sicherheitslabels an das empfangene Netzwerkpaket, wobei das Sicherheitslabel das empfangene Netzwerkpaket charakterisiert und wobei die Labelling-Einheit (22) zumindest teilweise als eine Hardwarekomponente ausgeführt ist; und
eine Prozessor-Einheit (12) zum Ermitteln, ob das aktuelle Sicherheitslabel mit einem der Sicherheitslabels übereinstimmt, die gemäß der Zugriffskontrolldaten (6) für eine ausgewählte Anwendung der M vorbestimmten Anwendungen (14a-14d) zulässig sind, und zum Bestimmen, dass das empfangene Netzwerkpaket für die ausgewählte Anwendung zulässig ist, falls ermittelt wird, dass das aktuelle Sicherheitslabel mit einem der Sicherheitslabels übereinstimmt, die gemäß der Zugriffskontrolldaten (6) für eine ausgewählte Anwendung der M vorbestimmten Anwendungen (14a-14d) zulässig sind.

## Beschreibung

Die vorliegende Erfindung betrifft eine Kommunikationsvorrichtung für eine erste Einrichtung sowie ein Verfahren zum Verarbeiten eines Netzwerkpakets durch eine erste Einrichtung.

Einrichtungen von unterschiedlichen Netzwerken kommunizieren häufig miteinander, indem sie Netzwerkpakete austauschen. Die Netzwerkpakete können insbesondere sicherheitsrelevante und/oder geheime Informationen enthalten. Deswegen kann gewünscht sein, dass der Austausch der Netzwerkpakete auf sichere Weise erfolgt. Hierzu können auf einer Einrichtung, insbesondere auf einer Kommunikationsvorrichtung dieser Einrichtung, Zugriffskontrolldaten, beispielsweise MAC-Regeln (Mandatory Access Control), gespeichert sein, die ein Filtern von eingehenden und ausgehenden Netzwerkpaketen ermöglichen. Es besteht allerdings die Gefahr, dass die Zugriffskontrolldaten manipuliert werden. Dadurch kann die Sicherheit der Netzwerkpakete gefährdet werden.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, das Dokument EP 3028140 B1, das Dokument EP 17175275 und das Dokument US 8 843 761 B2 bekannt.

Vor diesem Hintergrund besteht eine Aufgabe der vorliegenden Erfindung darin, eine verbesserte Kommunikationsvorrichtung für eine erste Einrichtung zu schaffen. Eine weitere Aufgabe besteht darin, ein verbessertes Verfahren zum Verarbeiten eines Netzwerkpakets durch eine erste Einrichtung zu schaffen.

Gemäß einem ersten Aspekt wird eine Kommunikationsvorrichtung für eine erste Einrichtung vorgeschlagen, wobei die Kommunikationsvorrichtung geeignet ist, ein eingehendes Netzwerkpaket von einer zweiten Einrichtung zu empfangen. Die Kommunikationsvorrichtung umfasst:
eine Netzwerkschnittstelle zum Empfangen des eingehenden Netzwerkpakets von der zweiten Einrichtung;
eine Speicher-Einheit zum Speichern von Zugriffskontrolldaten zur Angabe einer Anzahl N an Sicherheitslabels, die für eine Anzahl M an vorbestimmten Anwendungen zulässig sind, mit N≥1 und M≥1;
eine Labelling-Einheit zum Zuweisen eines aktuellen Sicherheitslabels an das durch die Netzwerkschnittstelle empfangene Netzwerkpaket, wobei das Sicherheitslabel das empfangene Netzwerkpaket charakterisiert und wobei die Labelling-Einheit zumindest teilweise als eine Hardwarekomponente ausgeführt ist; und
eine Prozessor-Einheit zum Ermitteln, ob das aktuelle Sicherheitslabel mit einem der Sicherheitslabels übereinstimmt, die gemäß der Zugriffskontrolldaten für eine ausgewählte Anwendung der Anzahl M an vorbestimmten Anwendungen zulässig sind, und zum Bestimmen, dass das empfangene Netzwerkpaket für die ausgewählte Anwendung zulässig ist, falls ermittelt wird, dass das aktuelle Sicherheitslabel mit einem der Sicherheitslabels übereinstimmt, die gemäß der Zugriffskontrolldaten für eine ausgewählte Anwendung der Anzahl M an vorbestimmten Anwendungen zulässig sind.

Die erste und die zweite Einrichtung, im Folgenden auch "Einrichtungen", können Geräte eines selben Netzwerks sein. Es ist auch möglich, dass es sich bei der ersten und der zweiten Einrichtung um Einrichtungen von unterschiedlichen Netzwerken handelt. Die Einrichtungen können zum Beispiel industrielle Geräte, insbesondere Sensoren, Aktuatoren oder Steuergeräte, oder IoT-Geräte (Internet of Things) sein. Die erste Einrichtung und/oder die zweite Einrichtung kann auch als eine Netzwerkkamera (engl. Internet Protocol Camera), eine Firewall, eine Schnittstelle zum Austausch von industriellen Daten und Diensten (industrial data space), eine IDS-Schnittstelle (intrusion detection system), eine VPN-Schnittstelle (virtual private network), eine speicherprogrammierbare Steuerung (engl.: Programmable Logic Controller, PLC), ein Feldgerät und/oder ein Cloud-Gerät ausgebildet sein.

Das Netzwerkpaket umfasst insbesondere Daten, die von der zweiten Einrichtung an die erste Einrichtung übertragen werden. Das Netzwerkpaket kann zum Beispiel Steuerdaten umfassen. Die Übertragung des Netzwerkpakets kann kabellos oder verkabelt erfolgen. Die Übertragung des Netzwerkpakets kann im Rahmen eines bekannten Datenübertragungsprozesses erfolgen.

Die Kommunikationsvorrichtung ist insbesondere Teil der ersten Einrichtung und für das Empfangen von Netzwerkpaketen von der zweiten Einrichtung eingerichtet. Das Empfangen der Netzwerkpakete kann über die physikalische Netzwerkschnittstelle erfolgen, die zum Beispiel als eine WLAN-Schnittelle, eine Ethernet-Schnittstelle, ein Bluetooth-Empfänger oder ein USB-Anschluss ausgebildet ist.

Die Speicher-Einheit kann ein Datenspeicher, z.B. ein RAM-Speicher (Random Access Memory), sein, auf dem die Zugriffskontrolldaten gespeichert sind. Die Zugriffskontrolldaten definieren insbesondere, ob bestimmte Sicherheitslabels für vorbestimmte Anwendungen zulässig sind. Unter einem Sicherheitslabel wird insbesondere eine Charakterisierung eines Netzwerkpakets bezeichnet. Es kann sich bei dem Sicherheitslabel um eine Abstrahierung des Inhalts des Netzwerkpakets handeln. Das Sicherheitslabel kann beispielsweise netzwerkpaketbezogene Informationen, wie zum Beispiel eine Information darüber, welche Einrichtung das Netzwerkpaket erzeugt hat oder für welche vorbestimmte Anwendung das Netzwerkpaket bestimmt ist, enthalten.

Die vorbestimmten Anwendungen sind insbesondere alle Aktionen, die die erste Einrichtung mit den Netzwerkpaketen durchführen kann. Eine vorbestimmte Anwendung kann z.B. ein Empfangen des Netzwerkpakets, ein Senden des Netzwerkpakets oder ein Verarbeiten des Netzwerkpakets durch eine dazu vorgesehene Applikation der ersten Einrichtung sein.

Insbesondere sind in den Zugriffskontrolldaten für jede vorbestimmte Anwendung aus den M vorbestimmten Anwendungen diejenigen N Sicherheitslabels angeben, die für diese vorbestimmte Anwendung zulässig sind. Unter zulässig ist insbesondere zu verstehen, dass die erste Einrichtung ein Durchführen der vorbestimmten Anwendung unter Verwendung des Netzwerkpakets erlaubt bzw. gestattet. Zulässige Sicherheitslabels sind insbesondere Sicherheitslabels, die Netzwerkpaketen zugeordnet sind, die aus Sicherheitssicht verlässlich sind.

Die Labelling-Einheit kann dem empfangenen Netzwerkpaket das aktuelle Sicherheitslabel zuweisen. Es kann auch von einem "Labelling" des empfangenen Netzwerkpakets durch die Labelling-Einheit gesprochen werden.

Es ist insbesondere zumindest ein Teil der Labelling-Einheit als eine Hardwarekomponente ausgebildet. Anders ausgedrückt ist die Labelling-Einheit insbesondere nicht lediglich als Softwarekomponente ausgebildet. Die Labelling-Einheit zumindest teilweise als Hardwarekomponente auszubilden, ist insbesondere gegenüber einer als Softwarekomponente ausgebildeten Labelling-Einheit vorteilhaft, weil die Funktion der Labelling-Einheit nicht durch einen Angriff auf die Software der ersten Einrichtung, zum Beispiel durch einen Angriff auf die Zugriffskontrolldaten, beeinflusst wird. Bei der Labelling-Einheit kann auch von einer für das Labelling von Netzwerkpaketen dedizierten Hardwarekomponente gesprochen werden.

Die Prozessor-Einheit kann insbesondere das durch die Labelling-Einheit bestimmte aktuelle Sicherheitslabel mit den Sicherheitslabels der Zugriffskontrolldaten vergleichen. Dabei überprüft die Prozessor-Einheit beispielsweise, ob das aktuelle Sicherheitslabel für die ausgewählte Anwendung der M vorbestimmten Anwendungen zulässig ist. Die ausgewählte Anwendung kann die für das empfangene Netzwerkpaket vorgesehene Anwendung sein.

Die Prozessor-Einheit kann Teil eines Prozessors, insbesondere eines Hauptprozessors (engl. CPU, central processing unit), sein. Bei der Prozessor-Einheit kann es sich um ein MAC-System handeln. Das MAC-System kann ein SELinux (security enhanced Linux), AppArmor, Smack oder TOMOYO Linux-basiertes System sein.

Falls die Prozessor-Einheit unter Berücksichtigung der Zugriffskontrolldaten bestimmt, dass das aktuelle Sicherheitslabel zulässig ist, wird insbesondere die ausgewählte Anwendung durch die erste Einrichtung durchgeführt. Falls die Prozessor-Einheit unter Berücksichtigung der Zugriffskontrolldaten bestimmt, dass das aktuelle Sicherheitslabel nicht zulässig ist, wird das Netzwerkpaket insbesondere gelöscht und/oder es wird ein Warnsignal ausgegeben.

Die beschriebene Kommunikationsvorrichtung ermöglicht insbesondere, das Labelling des empfangenen Netzwerkpakets mit einer dedizierten Labelling-Einheit durchzuführen, die zumindest teilweise als Hardwarekomponente ausgeführt ist. Dadurch, dass das Labelling des empfangenen Netzwerkpakets durch eine dafür bestimmte Labelling-Einheit durchgeführt wird, wird insbesondere sichergestellt, dass das Labelling des empfangenen Netzwerkpakets nicht durch eine Fehlfunktion der auf der ersten Einrichtung ausgeführten Software oder durch einen Angriff auf die erste Einrichtung beeinflusst wird. Mit der Kommunikationsvorrichtung kann z.B. verhindert werden, dass Netzwerkpakete für unzulässige Einrichtungen und/oder Benutzer sichtbar werden. Dadurch kann ein Schutz des Netzwerkpakets oder der ersten Einrichtung selbst erhöht werden, sollte das Netzwerkpaket beispielsweise schadhafte Anweisungen enthalten. Die Kommunikationsvorrichtung erhöht insbesondere die Sicherheit der ersten Einrichtung. Die Labelling-Einheit kann zur Bestimmung des zuzuordnenden aktuellen Sicherheitslabels unterschiedliche Informationen auswerten, die beim Empfang des Netzwerkpakets ermittelbar sind. Ausgewertet werden können beispielsweise der Header des empfangenen Netzwerkpakets, der Dateninhalt des empfangenen Netzwerkpakets, eine Identifizierungsinformation eines Network-Slices, eine Identifizierungsinformation eines Netzzugangsverbindungskontexts eines Mobilfunksystems (z.B. ein Packet Data Protocol PDP Kontext), der Netzwerkname eines verwendeten Mobilfunksystems (z.B. SSID-Name eines WLAN-Mobilfunksystems, mobile country code und mobile network code MCC+MNC eines zellulären Mobilfunksystems), das Frequenzband eines Mobilfunksystems, das Modulationsverfahren, die Datenrate, den Zeitpunkt des empfangenen Netzwerkpakets (z.B. ob es in einem Zeitfenster empfangen wurde, das für eine Safety-Kommunikation oder für eine Realtime-Kommunikation reserviert ist), oder eine elektrische Information eines Paketempfangs (z.B. Signalstärke, Radio Fingerprint eines Funksenders, z.B. das Einschwingverhalten einer Sendestufe).

Gemäß einer Ausführungsform ist die Kommunikationsvorrichtung ferner geeignet, über die Netzwerkschnittstelle ein ausgehendes Netzwerkpaket an die zweite Einrichtung zu senden; die Labelling-Einheit ist ferner geeignet, unter Berücksichtigung eines Inhalts des ausgehenden Netzwerkpakets und einer Metainformation, die der Labelling-Einheit zusammen mit dem ausgehenden Netzwerkpaket bereitgestellt wird, zu bestimmen, ob das Senden des ausgehenden Netzwerkpakets zulässig ist; und die Netzwerkschnittstelle ist ferner geeignet, das ausgehende Netzwerkpaket nur zu senden, falls die Labelling-Einheit bestimmt, dass das Senden des Netzwerkpakets zulässig ist. Weiterhin ist es möglich, dass das Senden des Netzwerkpakets nur auf eine bestimmte Art zulässig ist (z.B. Zeitfenster, Signalstärke, Modulationsverfahren, Frequenzband, Netzwerkname, Datenrate).

Mit der Kommunikationsvorrichtung können insbesondere auch ausgehende Netzwerkpakete an die zweite Einrichtung übertragen werden. Dabei kann die Labelling-Einheit z.B. bestimmen, ob das Senden des ausgehenden Netzwerkpakets zulässig ist oder nicht.

Das Bestimmen, ob das ausgehende Netzwerkpaket gesendet werden darf oder nicht, erfolgt insbesondere unter Berücksichtigung der Metainformation. Die Metainformation umfasst beispielsweise eine Information über den Prozess, der das Senden des ausgehenden Netzwerkpakets eingeleitet hat. Bei der Metainformation kann es sich zum Beispiel um einen SELinux-Sicherheitskontext des gegebenen Prozesses handeln.

Um zu bestimmen, ob das Senden des ausgehenden Netzwerkpakets zulässig ist, greift die Labelling-Einheit insbesondere auf die Information aus dem ausgehenden Netzwerkpaket zu. Diese Information umfasst zum Beispiel IP-Adressen (IP: Internetprotokoll) oder den verwendeten Netzwerk-Port des Prozesses, der das Senden des Netzwerkpakets einleitet, Information über vorhandene Schnittstellen und/oder MAC-Adressen.

Die Labelling-Einheit kann auch bestimmen, dass das Senden des ausgehenden Netzwerkpakets nur eingeschränkt zulässig ist, und einen Teil des ausgehenden Netzwerkpakets verwerfen und/oder dem ausgehenden Netzwerkpaket eine Zusatzinformation hinzufügen.

Die Netzwerkschnittstelle ist insbesondere geeignet, das ausgehende Netzwerkpaket in Abhängigkeit der durch die Labelling-Einheit bestimmten Zulässigkeit an die zweite Einrichtung zu übertragen oder auch nicht. Die Netzwerkeinrichtung überträgt das ausgehende Netzwerkpaket zum Beispiel nur, falls die Labelling-Einheit das Senden als zulässig erklärt hat.

In Ausführungsformen ist die Labelling-Einheit ferner geeignet, der Prozessor-Einheit eine Zulässigkeitsinformation zu übertragen, welche angibt, ob die Labelling-Einheit bestimmt hat, dass das Senden des ausgehenden Netzwerkpakets zulässig oder nicht zulässig ist, und/oder, wie das Senden erfolgt. Dadurch kann die Prozessor-Einheit eine Auskunft darüber erhalten, ob und/oder wie das Netzwerkpaket gesendet wurde.

Gemäß einer weiteren Ausführungsform ist die Labelling-Einheit ausschließlich als eine Hardwarekomponente ausgeführt und ist entlang eines Kommunikationspfads des empfangenen Netzwerkpakets zwischen der Netzwerkschnittstelle und der Prozessor-Einheit angeordnet.

Die Labelling-Einheit ist insbesondere eine Hardwarekomponente, die nicht Teil des Prozessors der ersten Einrichtung ist. Sie kann auch als eine Netzwerkzugriffskontrollkomponente bezeichnet werden. Die Labelling-Einheit ausschließlich als Hardwarekomponente auszubilden ist, wie zuvor beschrieben, insbesondere vorteilhaft, weil dadurch das Angriffsrisiko reduziert wird und das Netzwerkpaket sicher übertragen werden kann.

Gemäß einer weiteren Ausführungsform umfasst die Labelling-Einheit eine als Hardwarekomponente ausgebildete Management-Einheit und zumindest eine vertrauenswürdige Applikation, wobei die zumindest eine vertrauenswürdige Applikation geeignet ist, in Abhängigkeit eines Labelling-Befehls der Management-Einheit das Zuweisen des aktuellen Sicherheitslabels durchzuführen.

Die Labelling-Einheit kann zumindest teilweise Teil des Prozessors der ersten Einrichtung sein. Beispielsweise ist die Management-Einheit Teil des Prozessors. Die vertrauenswürdige Applikation kann außerhalb des Prozessors angeordnet sein. Sie ist zum Beispiel entlang des Kommunikationspfads des empfangenen Netzwerkpakets zwischen der Netzwerkschnittstelle und der Management-Einheit angeordnet.

Die vertrauenswürdige Applikation wird insbesondere durch die Management-Einheit gesteuert. Die zumindest eine vertrauenswürdige Applikation läuft insbesondere in einer vertrauenswürdigen Umgebung, z.B. in einem eigenen Speicherbereich oder unter beschränktem Zugriff auf weitere Ressourcen (z.B. Hardware-Schnittstellen). Die vertrauenswürdige Applikation kann einen Zugriff auf die Netzwerkschnittstelle haben.

Die Management-Einheit kann insbesondere mit der Prozessor-Einheit kommunizieren. Die als Hardwarekomponente ausgeführte Management-Einheit kann durch ein Betriebssystem der ersten Einrichtung, insbesondere durch den Prozessor der ersten Einrichtung, konfiguriert werden.

Die vertrauenswürdige Applikationen und/oder die Management-Einheit können unveränderlich in einem einmalig programmierbaren Speicherbereich konfiguriert werden.

Die Management-Einheit und die vertrauenswürdigen Applikationen können auch zu einem frühen Zeitpunkt der Bootphase, zum Beispiel unmittelbar vor einem Start des Kernels, konfiguriert werden. Nach Abschluss der Konfiguration kann der Konfigurationsmechanismus gesperrt werden. So ist die Konfiguration durch den Hersteller der ersten Einrichtung frei wählbar, aber nach dem Starten des Betriebssystems nicht mehr veränderbar.

Die Konfiguration der Management-Einheit und/oder der vertrauenswürdigen Applikationen kann auch durch das Betriebssystem der ersten Einrichtung übernommen werden.

Die Labelling-Einheit als eine Management-Einheit mit zumindest einer vertrauenswürdigen Applikation auszubilden ist, insbesondere vorteilhaft, weil die vertrauenswürdigen Applikationen aktualisiert werden können und zugleich anhand der als Hardware ausgebildeten Management-Einheit sichergestellt werden kann, dass das Labelling nicht kompromittiert wird. Gemäß einer weiteren Ausführungsform ist die zumindest eine vertrauenswürdige Applikation geeignet, in Abhängigkeit eines Überprüfungsbefehls der Management-Einheit zu bestimmen, ob das Senden des ausgehenden Netzwerkpakets zulässig ist.

Gemäß einer weiteren Ausführungsform weist die Labelling-Einheit mehrere vertrauenswürdige Applikationen auf und ist eingerichtet, diejenige vertrauenswürdige Applikation aus den mehreren vertrauenswürdigen Applikationen zu bestimmen, die das aktuelle Sicherheitslabel zuweisen soll und/oder die bestimmen soll, ob das Senden des ausgehenden Netzwerkpakets zulässig ist.

Die Management-Einheit kann z.B. die vertrauenswürdige Applikation auswählen, die zur Bearbeitung des Netzwerkpakets geeignet ist. Die Management-Einheit kann insbesondere mit einer MMU (Memory Management Unit, auch Speicherverwaltungseinheit) verglichen werden. Ähnlich zur MMU, die eine Umsetzung von virtuellen auf physikalischen Speicheradressen ermöglicht, kann die Management-Einheit verwendet werden, um eine Umsetzung von Sicherheitslabels oder Metainformationen auf eine der vertrauenswürdigen Applikationen für das Empfangen oder Senden von Netzwerkpaketen festzulegen.

Die Auswahl der geeigneten vertrauenswürdigen Applikation kann statisch oder dynamisch erfolgen. Bei der statischen Variante kann die Auswahl der vertrauenswürdigen Applikation vorgegeben sein. Es kann zum Beispiel für empfangene Netzwerkpakete immer dieselbe vertrauenswürdige Applikation ausgewählt werden, und es kann eine andere vertrauenswürdige Applikation für ausgehenden Netzwerkpakete ausgewählt werden. In der dynamischen Variante kann die Management-Einheit in Abhängigkeit von netzwerkpaketspezifischen Daten die geeignete vertrauenswürdige Applikation auswählen.

Gemäß einer weiteren Ausführungsform weist die Labelling-Einheit das aktuelle Sicherheitslabel unter Berücksichtigung von Labeldaten zu, wobei die Labeldaten zumindest teilweise:
in dem empfangenen Netzwerkpaket vorliegen;
in der Labelling-Einheit gespeichert sind;
in einer externen Labeldatenspeicher-Einheit gespeichert sind;
durch eine vorbestimmte Applikation, die das empfangene Netzwerkpaket verarbeitet, definiert sind; und/oder
durch die Netzwerkschnittstelle definiert sind.

Die Labeldaten bilden insbesondere ein Regelwerk für das Zuweisen des aktuellen Sicherheitslabels. Die Labeldaten ermöglichen der Labelling-Einheit beispielsweise, das aktuelle Sicherheitslabel für das empfangene Netzwerkpaket zu bestimmen.

Die Labeldaten können in dem empfangenen Netzwerkpaket vorliegen. Es kann sich dabei um IP-Adressen, MAC-Adressen, Schnittstellen, VLAN-Tags (Virtual Local Area Network) oder dergleichen handeln.

Die Labeldaten können auch in der Labelling-Einheit gespeichert sein. Sie können während eines Konfigurationsprozesses der Labelling-Einheit gespeichert werden. Falls die Labelling-Einheit eine programmierbare Schaltung ist, können die Labeldaten direkt in einen Bitstrom, der zum Programmieren der Labelling-Einheit verwendet wird, programmiert werden.

Alternativ können die Labeldaten auch auf einem externen Speicher gespeichert werden, zum Beispiel auf einer SD-Karte (secure digital), einem RAM-Speicher (random access memory), einem eMMC-Speicher (embedded multimedia card) oder einem EEPROM-Speicher (electrically erasable programmable read-only memory).

Es ist auch möglich, das Labelling anhand der physikalischen Netzwerkschnittstelle oder einer physikalischen Schnittstelle der zweiten Einrichtung durchzuführen. Die Labeldaten können dann durch die entsprechende Schnittstelle vorgegeben werden.

Einer Schnittstelle kann zum Beispiel ein festes Sicherheitslabel zugeordnet sein. Einer Schnittstelle können auch mehrere Sicherheitslabels zugeordnet sein.

Gemäß einer weiteren Ausführungsform ist die Labelling-Einheit als ein programmierbarer Baustein, insbesondere als eine Field-Programmable-Gate-Array (FPGA) Schaltung oder als eine ASIC (application-specific integrated circuit) Schaltung, ausgebildet.

Die FGPA-Schaltung kann zum Beispiel anhand einer Konfigurations-Einheit programmiert werden. Beim Programmieren der FGPA-Schaltung kann die Konfigurations-Einheit der Labelling-Einheit insbesondere auch die Labeldaten vorgeben.

Bei der FGPA-Schaltung kann es sich auch um eine einmalig programmierbare FGPA-Schaltung (engl. one time programmable, OTP) handeln. Die ASIC-Schaltung ist insbesondere ein Chip mit einer festen Funktionalität, welche bei der Herstellung der ASIC-Schaltung festgelegt wird.

Gemäß einer weiteren Ausführungsform ist die Prozessor-Einheit ein Mandatory-Access-Control (MAC) System.

Gemäß einer weiteren Ausführungsform ist die Labelling-Einheit ferner geeignet, das empfangene Netzwerkpaket zu verwerfen, falls sie von der Prozessor-Einheit einen Befehl zum Verwerfen des empfangenen Netzwerkpakets erhält.

Gemäß einem zweiten Aspekt wird ein System vorgeschlagen, welches eine erste Einrichtung mit einer Kommunikationsvorrichtung gemäß dem ersten Aspekt oder gemäß einer Ausführungsform des ersten Aspekts und eine zweite Einrichtung umfasst.

Die für die vorgeschlagene Kommunikationsvorrichtung gemäß dem ersten Aspekt beschriebenen Ausführungsformen und Merkmale gelten für das vorgeschlagene System gemäß dem zweiten Aspekt entsprechend.

Gemäß einem dritten Aspekt wird ein Verfahren zum Verarbeiten eines Netzwerkpakets durch eine erste Einrichtung vorgeschlagen. Das Verfahren umfasst:
Empfangen des Netzwerkpakets von einer zweiten Einrichtung;
Speichern von Zugriffskontrolldaten zur Angabe einer Anzahl N an Sicherheitslabels, die für eine Anzahl M an vorbestimmten Anwendungen zulässig sind, mit N≥1 und M≥1;
Zuweisen eines aktuellen Sicherheitslabels an das empfangene Netzwerkpaket durch eine Labelling-Einheit, wobei das Sicherheitslabel das empfangene Netzwerkpaket charakterisiert und wobei die Labelling-Einheit zumindest teilweise als eine Hardwarekomponente ausgeführt ist;
Ermitteln, ob das aktuelle Sicherheitslabel mit einem der Sicherheitslabels übereinstimmt, die gemäß der Zugriffskontrolldaten für eine ausgewählte Anwendung der Anzahl M an vorbestimmten Anwendungen zulässig sind; und
Bestimmen, dass das empfangene Netzwerkpaket für die ausgewählte Anwendung zulässig ist, falls ermittelt wird, dass das aktuelle Sicherheitslabel mit einem der Sicherheitslabels übereinstimmt, die gemäß der Zugriffskontrolldaten für eine ausgewählte Anwendung der Anzahl M an vorbestimmten Anwendungen zulässig sind.

Die für die vorgeschlagene Vorrichtung gemäß dem ersten Aspekt beschriebenen Ausführungsformen und Merkmale gelten für das vorgeschlagene Verfahren gemäß dem dritten Aspekt entsprechend.

Gemäß einer Ausführungsform wird das Verfahren gemäß dem dritten Aspekt mit einer Kommunikationsvorrichtung gemäß dem ersten Aspekt oder gemäß einer Ausführungsform des ersten Aspekts durchgeführt.

Gemäß einem vierten Aspekt wird ein Computerprogrammprodukt vorgeschlagen, welches auf einer programmgesteuerten Einrichtung die Durchführung des Verfahrens gemäß dem dritten Aspekt oder gemäß einer Ausführungsform des dritten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein System mit einer Kommunikationsvorrichtung gemäß einer ersten Ausführungsform;
- Fig. 2: zeigt die Kommunikationsvorrichtung gemäß der ersten Ausführungsform;
- Fig. 3: zeigt ein Verfahren zum Verarbeiten eines Netzwerkpakets gemäß einer ersten Ausführungsform;
- Fig. 4: zeigt ein Verfahren zum Verarbeiten eines Netzwerkpakets gemäß einer zweiten Ausführungsform;
- Fig. 5: zeigt ein erstes Beispiel einer ersten Einrichtung mit einer Kommunikationsvorrichtung gemäß einer zweiten Ausführungsform; und
- Fig. 6: zeigt ein zweites Beispiel einer ersten Einrichtung mit einer Kommunikationsvorrichtung gemäß einer dritten Ausführungsform.

In den Figuren sind gleiche oder funktionsgleiche Elemente mit denselben Bezugszeichen versehen worden, sofern nichts anderes angegeben ist.

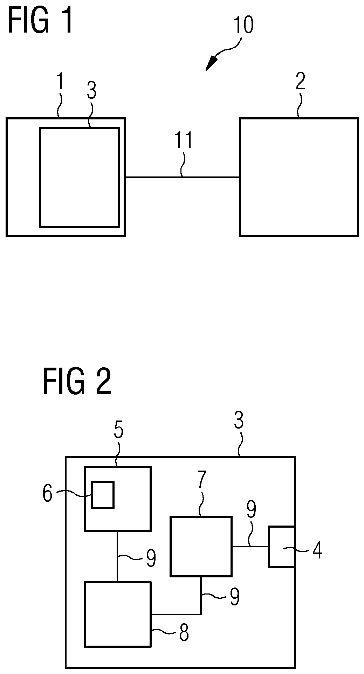

Die Fig. 1 zeigt ein Beispiel für ein System 10 mit einer Kommunikationsvorrichtung 3 gemäß einer ersten Ausführungsform. Das System 10 umfasst eine erste Einrichtung 1 und eine zweite Einrichtung 2.

Bei der ersten Einrichtung 1 handelt es sich um ein Backendgerät. Bei der zweiten Einrichtung 2 handelt es sich um ein Internet-der-Dinge-Gerät, das Daten eines nicht dargestellten Steuerungsgeräts ausliest.

Die zweite Einrichtung 2 kann die ausgelesenen Daten als Netzwerkpakete an die erste Einrichtung 1 übertragen. Die Übertragung erfolgt über ein Kabel 11. Alternativ kann die Übertragung auch kabellos erfolgen.

Die erste Einrichtung 1 umfasst die Kommunikationsvorrichtung 3 gemäß der ersten Ausführungsform, welche in der Fig. 2 detaillierter dargestellt ist. Im Folgenden werden die Figuren 1 und 2 zusammen beschrieben.

Die Kommunikationsvorrichtung 3 umfasst eine Netzwerkschnittstelle 4, eine Speicher-Einheit 5, eine Labelling-Einheit 7 und eine Prozessor-Einheit 8, die über interne Leitungen 9 miteinander verbunden sind.

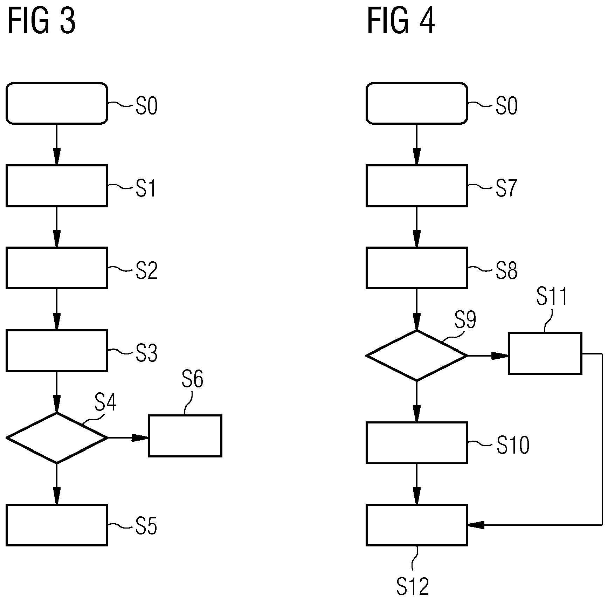

Die Funktion der Kommunikationsvorrichtung 3 und ihrer einzelnen Bauteile wird im Folgenden anhand der Fig. 3 beschrieben. Fig. 3 zeigt ein Verfahren zum Verarbeiten eines empfangenen Netzwerkpakets.

In einem Vorbereitungsschritt S0 wird die Kommunikationsvorrichtung 3 bereitgestellt. In einem Schritt S1 empfängt die erste Einrichtung 1 das Netzwerkpaket über die Netzwerkschnittstelle 4. Die Netzwerkschnittstelle 4 ist eine physikalische Schnittstelle, zum Beispiel ein Ethernet-Anschluss. Sie dient dazu, Netzwerkpakete, die von der zweiten Einrichtung 2 an die erste Einrichtung 1 übertragen werden, zu empfangen und über die interne Leitung 9 an die Labelling-Einheit 7 weiterzuleiten.

In einem Schritt S2 werden Zugriffskontrolldaten 6 in der Speicher-Einheit 5 gespeichert. Die Speicher-Einheit 5 ist ein RAM-Speicher. Die Zugriffskontrolldaten 6 geben für eine Vielzahl M an Anwendungen an, welche N Sicherheitslabels zulässig sind. Nur Netzwerkpakete mit zulässigen Sicherheitslabels sollen durch die erste Einrichtung 1 verwendet werden. Anwendungen sind zum Beispiel das Lesen des Datenpakets oder das Durchführen eines Rechenprozesses anhand des Datenpakets. Die Zugriffskontrolldaten 6 geben zum Beispiel an, dass alle von der zweiten Einrichtung 2 über das Kabel 11 empfangene Netzwerkpakete zulässig sind, dass nur Netzwerkpakete mit einem vorbestimmten Datenformat zulässig sind und/oder dass nur Netzwerkpakete, die eine vorbestimmte Zeit ab ihrer Erzeugung durch die erste Einrichtung 1 empfangen werden, gültig sind.

In einem Schritt S3 weist die Labelling-Einheit 7 dem empfangenen Netzwerkpaket ein aktuelles Sicherheitslabel zu. Dieses erfolgt unter Berücksichtigung von Labeldaten, die in der Labelling-Einheit 7 eingebettet sind. Das aktuelle Sicherheitslabel beschreibt die wesentlichen Eigenschaften des empfangenen Netzwerkpakets. Das aktuelle Sicherheitslabel gibt dabei an, von welcher Einrichtung das Netzwerkpaket empfangen wurde, gemäß welchem Protokoll es empfangen wurde und für welche Anwendung es bestimmt ist. Die Labelling-Einheit 7 ist als eine FGPA-Schaltung ausgeführt. Dabei handelt es sich um eine Hardwarekomponente.

Die Labelling-Einheit 7 übermittelt das Netzwerkpaket anschließend zusammen mit dem aktuellen Sicherheitslabel an die Prozessor-Einheit 8.

In einem Schritt S4 ermittelt die Prozessor-Einheit 8, ob das aktuelle Sicherheitslabel gemäß der Zugriffskontrolldaten 6 zulässig ist oder nicht. Hierzu vergleicht die Prozessor-Einheit 8 das aktuelle Sicherheitslabel mit den gemäß der Zugriffskontrolldaten 6 für die geplante Anwendung zulässigen Sicherheitslabels.

Bei Übereinstimmen des aktuellen Sicherheitslabels mit einem der zulässigen Sicherheitslabels bestimmt die Prozessor-Einheit 8 in einem Schritt S5, dass das Sicherheitslabel zulässig ist, und dass das empfangene Netzwerkpaket empfangen und verwendet werden darf. Die erste Einrichtung 1 führt anschließend die Anwendung durch, für die das empfangene Netzwerkpaket bestimmt ist.

Falls in dem Schritt S4 bestimmt wird, dass das aktuelle Sicherheitslabel nicht mit einem der zulässigen Sicherheitslabels übereinstimmt, wird in einem Schritt S6 bestimmt, dass das aktuelle Netzwerkpaket nicht durch die erste Einrichtung 1 benutzt werden darf. Das empfangene Netzwerkpaket wird in diesem Fall durch die Prozessor-Einheit 8 verworfen und die Anwendung, die für das empfangene Netzwerkpaket bestimmt war, wird nicht durchgeführt.

Die Kommunikationsvorrichtung 3 kann auch eingesetzt werden, um Netzwerkpakete von der ersten an die zweite Einrichtung 1, 2 zu übertragen. Das Versenden von ausgehenden Netzwerkpaketen wird im Folgenden in Bezug auf die Fig. 4 beschrieben. Die Fig. 4 zeigt ein Verfahren zum Verarbeiten eines Netzwerkpakets gemäß einer zweiten Ausführungsform.

Der Schritt S0 entspricht dem zuvor beschriebenen Schritt S0. In einem Schritt S7 wird das zu versendende Netzwerkpaket durch die erste Einrichtung 1 erzeugt. Hierzu werden zum Beispiel nicht dargestellte Applikationen der ersten Einrichtung 1 verwendet. Das erzeugte Netzwerkpaket wird an die Prozessor-Einheit 8 übertragen.

In einem Schritt S8 ordnet die Prozessor-Einheit 8 dem ausgehenden Netzwerkpaket eine Metainformation zu. Diese gibt zum Beispiel an, durch welche Applikation das ausgehende Netzwerkpaket erzeugt wurde und an welche Einrichtung das Netzwerkpaket geschickt werden soll. Die Prozessor-Einheit 8 überträgt anschließend das ausgehende Netzwerkpaket zusammen mit der Metainformation an die Labelling-Einheit 7.

In einem Schritt S9 bestimmt die Labelling-Einheit 7 anhand der Metainformation und des Inhalts des ausgehenden Netzwerkpakets, ob das ausgehende Netzwerkpaket versendet werden darf.

Falls die Labelling-Einheit 7 bestimmt, dass das Versenden des Netzwerkpakets zulässig ist, überträgt diese das Netzwerkpaket in einem Schritt S10 an die Netzwerkschnittstelle 4. In dem Schritt S10 überträgt die Netzwerkschnittstelle 4 das Netzwerkpaket über das Kabel 11 an die zweite Einrichtung 2.

Falls die Labelling-Einheit 7 in dem Schritt S9 bestimmt, dass das Versenden des Netzwerkpakets unzulässig ist, verwirft sie in einem Schritt S11 das ausgehende Netzwerkpaket.

Die Labelling-Einheit 7 schickt der Prozessor-Einheit 8 in einem Schritt S12 eine Zulässigkeitsinformation, die angibt, ob das Senden des ausgehenden Netzwerkpakets erfolgreich war (Schritt S10) oder nicht (Schritt S11).

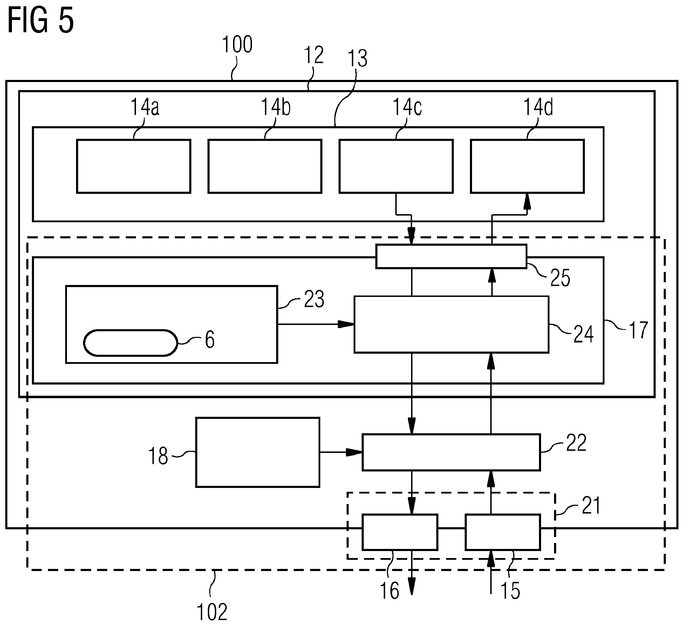

Die Fig. 5 zeigt ein erstes Beispiel einer ersten Einrichtung 100 mit einer Kommunikationsvorrichtung 102 gemäß einer zweiten Ausführungsform. Analog zur Kommunikationsvorrichtung 3 gemäß der ersten Ausführungsform, ermöglicht die Kommunikationsvorrichtung 102 gemäß der zweiten Ausführungsform der ersten Einrichtung 100, Netzwerkpakete von der zweiten Einrichtung 2 zu empfangen und Netzwerkpakete an die zweite Einrichtung 2 zu senden.

Die erste Einrichtung 100 ist ein eingebettetes Gerät und umfasst einen Prozessor 12, eine Konfigurations-Einheit 18, eine Labelling-Einheit 22 und eine Netzwerkschnittstelle 21. Die Netzwerkschnittstelle 21 umfasst eine Eingangsschnittstelle 15 zum Empfangen von eingehenden Netzwerkpaketen und eine Ausgangsschnittstelle 16 zum Versenden von ausgehenden Netzwerkpaketen.

Die Labelling-Einheit 22 ist als FPGA-Schaltung ausgebildet. Es handelt sich dabei um eine Hardwarekomponente, die außerhalb des Prozessors 12 der ersten Einrichtung 100 vorgesehen ist. Die FPGA-Schaltung 22 wird anhand von Daten, die in der Konfigurations-Einheit 18 gespeichert sind, konfiguriert. Die Konfiguration erfolgt bei Systemstart durch Integrieren von Labeldaten in einen Konfigurationsbitstream. Anhand der Labeldaten kann die FPGA-Schaltung 22 empfangenen Netzwerkpaketen das aktuelle Sicherheitslabel zuweisen.

Der Prozessor 12 umfasst einen Applikationsbereich 13 mit mehreren Applikationen 14a - 14d, die unterschiedliche Prozesse bzw. Anwendungen ausführen können. In dem in der Fig. 5 dargestellten Beispiel ist die Applikation 14c zum Erzeugen und Senden von Netzwerkpaketen geeignet, während die Applikation 14d zum Empfangen und Verarbeiten von Netzwerkpaketen geeignet ist.

Der Prozessor 12 umfasst ferner einen Kernelbereich 17, der über eine Systemschnittstelle 25 mit dem Applikationsbereich 13 kommuniziert. Der Kernelbereich 17 umfasst eine Speicher-Einheit 23 und eine Prozessor-Einheit 24, deren Funktionen analog zu denen der zuvor beschriebenen Speicher-Einheit 5 und Prozessor-Einheit 8 sind. In der Speicher-Einheit 23 sind Zugriffskontrolldaten 6 gespeichert. Bei den Zugriffskontrolldaten 6 handelt es sich um MAC-Regeln, insbesondere um Regeln einer SELinux-Policy.

Auch die Kommunikationsvorrichtung 102 kann zum Durchführen der Verfahren aus den Fig. 3 und 4 eingesetzt werden. Das Empfangen und Senden von Netzwerkpaketen erfolgt anhand der Kommunikationsvorrichtung 102 fast identisch zu dem Empfangen und Senden von Netzwerkpaketen anhand der Kommunikationsvorrichtung 3 und wird deswegen im Folgenden nur kurz erläutert.

Das Empfangen eines Netzwerkpakets von der zweiten Einrichtung 2 wird anhand der Fig. 3 beschrieben. In dem Schritt S0 wird die Kommunikationsvorrichtung 102 bereitgestellt. In dem Schritt S1 empfängt die erste Einrichtung 100 das Netzwerkpaket von der zweiten Einrichtung 2 über die Eingangsschnittstelle 15. In dem Schritt S2 werden die Zugriffskontrolldaten 6 in die Speicher-Einheit 23 gespeichert.

In dem Schritt S3 weist die FPGA-Schaltung 22 dem empfangenen Netzwerkpaket ein aktuelles Sicherheitslabel zu. Hierzu verwendet die FPGA-Schaltung 22 die vorkonfigurierten Labeldaten. Das empfangene Netzwerkpaket erhält also ein Sicherheitslabel, bevor es erstmals durch den Prozessor 12 verarbeitet wird. Die FPGA-Schaltung 22 gibt anschließend das empfangene Netzwerkpaket mit dem aktuellen Sicherheitslabel an die Prozessor-Einheit 24 weiter. Diese bestimmt in dem Schritt S4, unter Berücksichtigung der Zugriffskontrolldaten 6 der Speicher-Einheit 23, ob das aktuelle Sicherheitslabel zulässig ist oder nicht. Falls es zulässig ist, überträgt die Systemschnittstelle 25 in dem Schritt S5 das empfangene Netzwerkpaket an die Applikation 14d. Falls das aktuelle Sicherheitslabel nicht zulässig ist, verwirft die Prozessor-Einheit 24 in dem Schritt S6 das empfangene Netzwerkpaket.

Das Senden eines Netzwerkpakets an die zweite Einrichtung 2 wird in Bezug auf die Fig. 4 beschrieben. In dem Schritt S0 wird die Kommunikationsvorrichtung 102 bereitgestellt. In dem Schritt S7 erzeugt die Applikation 14c das Netzwerkpaket und überträgt es über die Systemschnittstelle 25 an die Prozessor-Einheit 24. Die Prozessor-Einheit 24 weist dem ausgehenden Netzwerkpaket in dem Schritt S8 eine Metainformation zu. Diese entspricht einem Sicherheitskontext des ausgehenden Netzwerkpakets und wird anhand eines Teils der Zugriffskontrolldaten 6 an das ausgehende Netzwerkpaket ausgegeben. Das ausgehende Netzwerkpaket und die Metainformation werden an die FPGA-Schaltung 22 übertragen.

In dem Schritt S9 bestimmt die FPGA-Schaltung 22, ob das ausgehende Netzwerkpaket verschickt werden darf. Hierzu berücksichtigt die FGPA-Schaltung 22 die Metainformation sowie die Labeldaten. Falls in dem Schritt S9 bestimmt wird, dass das Netzwerkpaket versendet werden darf, überträgt die Ausgangsschnittstelle 16 in dem Schritt S10 das ausgehende Netzwerkpaket an die zweite Einrichtung 2. Falls in dem Schritt S11 bestimmt wird, dass das Netzwerkpaket nicht versendet werden darf, wird das ausgehende Netzwerkpaket in dem Schritt S11 durch die FPGA-Schaltung 22 verworfen. In dem Schritt S12 schickt die FPGA-Schaltung 22 der Prozessor-Einheit 24 eine Zulässigkeitsinformation, die angibt, ob das ausgehende Netzwerkpaket erfolgreich versendet wurde oder nicht.

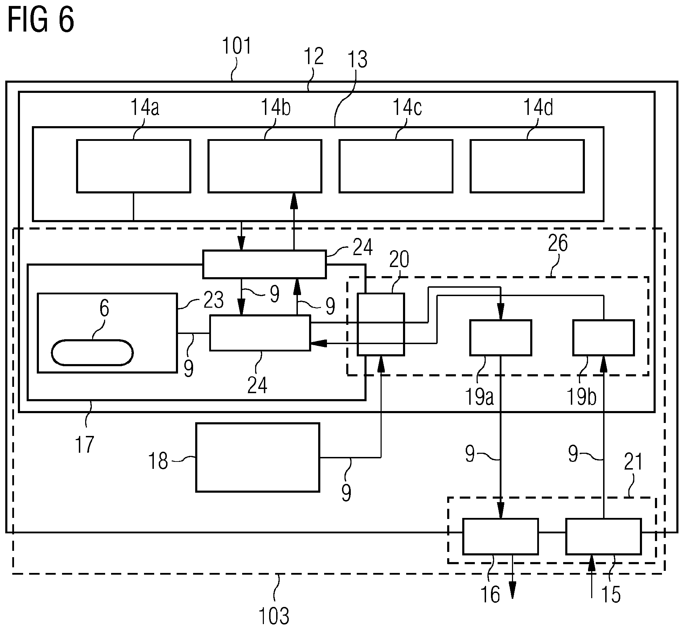

Die Fig. 6 zeigt ein zweites Beispiel einer ersten Einrichtung 101 mit einer Kommunikationsvorrichtung 103 gemäß einer dritten Ausführungsform. Die Kommunikationsvorrichtung 103 gemäß der dritten Ausführungsform ist ähnlich zur Kommunikationsvorrichtung 102 gemäß der zweiten Ausführungsform aufgebaut und ermöglicht der ersten Einrichtung 101, Netzwerkpakete von der zweiten Einrichtung 2 zu empfangen und Netzwerkpakete an die zweite Einrichtung 2 zu senden. Im Folgenden werden die Unterschiede zwischen der Kommunikationsvorrichtung 103 gemäß der dritten Ausführungsform und der Kommunikationsvorrichtung 102 gemäß der zweiten Ausführungsform beschrieben.

Statt einer FGPA-Schaltung 22, die außerhalb des Prozessors 12 angeordnet ist, weist die Kommunikationsvorrichtung 103 gemäß der dritten Ausführungsform eine Labelling-Einheit 26 mit einer Management-Einheit 20 und zwei vertrauenswürdigen Applikationen 19a, 19b auf. Die Management-Einheit 20 dient zur Steuerung der vertrauenswürdigen Applikationen 19a, 19b und ist als eine Hardwarekomponente ausgebildet. Die Management-Einheit 20 wird durch die Konfigurations-Einheit 18 konfiguriert.

Die vertrauenswürdige Applikation 19a dient dazu, für ausgehende Netzwerkpakete zu überprüfen, ob sie versendet werden dürfen. Hierzu werden der vertrauenswürdigen Applikation 19a über die Management-Einheit 20 Metainformationen von der Prozessor-Einheit 24 bereitgestellt. Die vertrauenswürdige Applikation 19a, 19b, die zum Senden der ausgehenden Netzwerkpakete zu verwenden ist, wird durch die Management-Einheit 20 bestimmt. Dieses Bestimmen erfolgt unter Berücksichtigung eines Sicherheitskontexts der Applikation 14a - 14d, die das Netzwerkpaket übertragen möchte.

Die vertrauenswürdige Applikation 19b dient dazu, das Labelling der über die Eingangsschnittstelle 15 empfangenen Netzwerkpakete durchzuführen. Hierzu erhält die vertrauenswürdige Applikation 19a Labeldaten als ein Labelling-Befehl von der Management-Einheit 20. Die vertrauenswürdige Applikation 19a, 19b, die zum Labelling des empfangenen Netzwerkpakets zu verwenden ist, wird durch die Management-Einheit 20 bestimmt. Das Labelling des empfangenen Netzwerkpakets erfolgt anhand der Kommunikationsvorrichtung 103, bereits bevor es zum ersten Mal durch den Prozessor 12 verarbeitet wird. Die Kommunikationsvorrichtung 103 gemäß der dritten Ausführungsform kann die Verfahren aus den Fig. 3 und 4 analog zur Kommunikationsvorrichtung 102 gemäß der zweiten Ausführungsform durchführen. Dabei erfolgt in dem Schritt S3 das Labelling des empfangenen Netzwerkpakets anhand der durch die Management-Einheit 20 bestimmten vertrauenswürdigen Applikation 19b. In dem Schritt S9 ist es die durch die Management-Einheit 20 bestimmte vertrauenswürdige Applikation 19b, die bestimmt, ob das Senden des ausgehenden Netzwerkpakets zulässig ist oder nicht.

Obwohl die vorliegende Erfindung anhand von Ausführungsbeispielen beschrieben wurde, ist sie vielfältig modifizierbar. Der Schritt S2 des Verfahrens zum Verarbeiten eines Netzwerkpakets kann beispielsweise bereits vor dem Schritt S1 und/oder vor dem Schritt S0 durchgeführt werden. Es ist auch möglich, dass der Prozessor-Einheit 8 für den Schritt S4 zunächst nur das aktuelle Sicherheitslabel bereitgestellt wird, und dass die Labelling-Einheit 7 gegebenenfalls das Netzwerkpaket verwirft. Es ist auch möglich, nur eine oder mehr als zwei vertrauenswürdige Applikationen 19a, 19b vorzusehen, die durch die Management-Einheit 20 auswählbar sind.

## Patentansprüche

1. Kommunikationsvorrichtung (3, 102, 103) für eine erste Einrichtung (1, 100, 101), wobei die Kommunikationsvorrichtung (3, 102, 103) geeignet ist, ein eingehendes Netzwerkpaket von einer zweiten Einrichtung (2) zu empfangen, umfassend:
eine Netzwerkschnittstelle (4, 21) zum Empfangen des eingehenden Netzwerkpakets von der zweiten Einrichtung (2);
eine Speicher-Einheit (5, 23) zum Speichern von Zugriffskontrolldaten (6) zur Angabe einer Anzahl N an Sicherheitslabels, die für eine Anzahl M an vorbestimmten Anwendungen zulässig sind, mit N≥1 und M≥1;
eine Labelling-Einheit (7, 22, 26) zum Zuweisen eines aktuellen Sicherheitslabels an das durch die Netzwerkschnittstelle (4, 21) empfangene Netzwerkpaket, wobei das Sicherheitslabel das empfangene Netzwerkpaket charakterisiert und wobei die Labelling-Einheit (7, 22, 26) zumindest teilweise als eine Hardwarekomponente ausgeführt ist; und
eine Prozessor-Einheit (8, 24) zum Ermitteln, ob das aktuelle Sicherheitslabel mit einem der Sicherheitslabels übereinstimmt, die gemäß der Zugriffskontrolldaten (6) für eine ausgewählte Anwendung der Anzahl M an vorbestimmten Anwendungen zulässig sind, und zum Bestimmen, dass das empfangene Netzwerkpaket für die ausgewählte Anwendung zulässig ist, falls ermittelt wird, dass das aktuelle Sicherheitslabel mit einem der Sicherheitslabels übereinstimmt, die gemäß der Zugriffskontrolldaten (6) für eine ausgewählte Anwendung der Anzahl M an vorbestimmten Anwendungen zulässig sind.

2. Kommunikationsvorrichtung nach Anspruch 1,
**dadurch gekennzeichnet,**
**dass** die Kommunikationsvorrichtung (3, 102, 103) ferner geeignet ist, über die Netzwerkschnittstelle (4, 21) ein ausgehendes Netzwerkpaket an die zweite Einrichtung (2) zu senden; dass die Labelling-Einheit (7, 22, 26) ferner geeignet ist, unter Berücksichtigung eines Inhalts des ausgehenden Netzwerkpakets und einer Metainformation, die der Labelling-Einheit (7, 22, 26) zusammen mit dem ausgehenden Netzwerkpaket bereitgestellt wird, zu bestimmen, ob das Senden des ausgehenden Netzwerkpakets zulässig ist; und
**dass** die Netzwerkschnittstelle (4, 21) ferner geeignet ist, das ausgehende Netzwerkpaket nur zu senden, falls die Labelling-Einheit (7, 22, 26) bestimmt, dass das Senden des Netzwerkpakets zulässig ist.

3. Kommunikationsvorrichtung nach Anspruch 1 oder 2,
**dadurch gekennzeichnet,**
**dass** die Labelling-Einheit (7, 22, 26) ausschließlich als eine Hardwarekomponente ausgeführt ist und entlang eines Kommunikationspfads des empfangenen Netzwerkpakets zwischen der Netzwerkschnittstelle (4, 21) und der Prozessor-Einheit (8, 24) angeordnet ist.

4. Kommunikationsvorrichtung nach Anspruch 1 oder 2,
**dadurch gekennzeichnet,**
**dass** die Labelling-Einheit (7, 22, 26) eine als Hardwarekomponente ausgebildete Management-Einheit (20) und zumindest eine vertrauenswürdige Applikation (19a, 19b) umfasst, wobei die zumindest eine vertrauenswürdige Applikation (19a, 19b) geeignet ist, in Abhängigkeit eines Labelling-Befehls der Management-Einheit (20) das Zuweisen des aktuellen Sicherheitslabels durchzuführen.

5. Kommunikationsvorrichtung nach Anspruch 4,
**dadurch gekennzeichnet,**
**dass** die zumindest eine vertrauenswürdige Applikation (19a, 19b) geeignet ist, in Abhängigkeit eines Überprüfungsbefehls der Management-Einheit (20) zu bestimmen, ob das Senden des ausgehenden Netzwerkpakets zulässig ist.

6. Kommunikationsvorrichtung nach Anspruch 4 oder 5,
**dadurch gekennzeichnet,**
**dass** die Labelling-Einheit (7, 22, 26) mehrere vertrauenswürdige Applikationen (19a, 19b) aufweist und die Management-Einheit (20) eingerichtet ist, diejenige vertrauenswürdige Applikation (19a, 19b) aus den mehreren vertrauenswürdigen Applikationen (19a, 19b) zu bestimmen, die das aktuelle Sicherheitslabel zuweisen soll und/oder die bestimmen soll, ob das Senden des ausgehenden Netzwerkpakets zulässig ist.

7. Kommunikationsvorrichtung nach einem der Ansprüche 1 bis 6,
**dadurch gekennzeichnet,**
**dass** die Labelling-Einheit (7, 22, 26) das aktuelle Sicherheitslabel unter Berücksichtigung von Labeldaten zuweist, wobei die Labeldaten zumindest teilweise:
in dem empfangenen Netzwerkpaket vorliegen;
in der Labelling-Einheit (7, 22, 26) gespeichert sind;
in einer externen Labeldatenspeicher-Einheit gespeichert sind;
durch eine vorbestimmte Applikation, die das empfangene Netzwerkpaket verarbeitet, definiert sind; und/oder
durch die Netzwerkschnittstelle (4, 21) definiert sind.

8. Kommunikationsvorrichtung nach einem der Ansprüche 1 bis 7,
**dadurch gekennzeichnet,**
**dass** die Labelling-Einheit (7, 22, 26) als ein programmierbarer Baustein, insbesondere als eine Field-Programmable-Gate-Array (FPGA) Schaltung oder als eine ASIC (application-specific integrated circuit) Schaltung, ausgebildet ist.

9. Kommunikationsvorrichtung nach einem der Ansprüche 1 bis 8,
**dadurch gekennzeichnet,**
**dass** die Prozessor-Einheit (8, 24) ein Mandatory-Access-Control (MAC) System ist.

10. Kommunikationsvorrichtung nach einem der Ansprüche 1 bis 9,
**dadurch gekennzeichnet,**
**dass** die Labelling-Einheit (7, 22, 26) ferner geeignet ist, das empfangene Netzwerkpaket zu verwerfen, falls sie von der Prozessor-Einheit (8, 24) einen Befehl zum Verwerfen des empfangenen Netzwerkpakets erhält.

11. System (10), welches eine erste Einrichtung (1, 100, 101) mit einer Kommunikationsvorrichtung (3, 102, 103) nach einem der Ansprüche 1 bis 10 und eine zweite Einrichtung (2) umfasst.

12. Verfahren zum Verarbeiten eines Netzwerkpakets durch eine erste Einrichtung (1, 100, 101), umfassend:
Empfangen (S1) des Netzwerkpakets von einer zweiten Einrichtung (2);
Speichern (S2) von Zugriffskontrolldaten (6) zur Angabe einer Anzahl N an Sicherheitslabels, die für eine Anzahl M an vorbestimmten Anwendungen zulässig sind, mit N≥1 und M≥1;
Zuweisen (S3) eines aktuellen Sicherheitslabels an das empfangene Netzwerkpaket durch eine Labelling-Einheit (7, 22, 26), wobei das Sicherheitslabel das empfangene Netzwerkpaket charakterisiert und wobei die Labelling-Einheit (7, 22, 26) zumindest teilweise als eine Hardwarekomponente ausgeführt ist;
Ermitteln (S4), ob das aktuelle Sicherheitslabel mit einem der Sicherheitslabels übereinstimmt, die gemäß der Zugriffskontrolldaten (6) für eine ausgewählte Anwendung der Anzahl M an vorbestimmten Anwendungen zulässig sind; und
Bestimmen (S5), dass das empfangene Netzwerkpaket für die ausgewählte Anwendung zulässig ist, falls ermittelt wird, dass das aktuelle Sicherheitslabel mit einem der Sicherheitslabels übereinstimmt, die gemäß der Zugriffskontrolldaten (6) für eine ausgewählte Anwendung der Anzahl M an vorbestimmten Anwendungen zulässig sind.

13. Verfahren nach Anspruch 12, welches mit einer Kommunikationsvorrichtung (3, 102, 103) nach einem der Ansprüche 1 bis 10 durchgeführt wird.

14. Computerprogrammprodukt, welches auf einer programmgesteuerten Einrichtung die Durchführung des Verfahrens nach Anspruch 12 oder 13 veranlasst.
